# EUROPEAN PATENT APPLICATION

(11) **EP 4 768 939 A1**
(43) Date of publication of application: **01.07.2026**
(21) Application number: 24945738.3
(22) Date of filing: 04.11.2024
(51) Int. Cl.: G01R 31/371, G01R 31/396, G01R 31/36, G01R 31/367, H04L 9/08

(54) **ELECTRONIC DEVICE AND METHOD FOR PROVIDING DIAGNOSIS RESULT OF BATTERY**

(30) Priority: 17.06.2024 KR 20240078081
(71) Applicant: LG Energy Solution, Ltd., Seoul 07335 (KR)
(72) Inventor: PARK, Heonil, Daejeon 34122 (KR)
(74) Representative: Plasseraud IP
(86) International application number: PCT/KR2024/017171
(87) International publication number: WO 2025/263693

(57) **Abstract**

Disclosed are a method for providing a diagnosis result of a battery and an electronic device for performing the same, wherein the method comprises the step of: transmitting a first state value including information on an analysis state of the battery; receiving a second state value in which the first state value is changed on the basis of an analysis progress state of the battery; and providing a diagnosis result of the battery on the basis of the second state value.

## Description

### Technical Field

The present disclosure relates to a method for providing diagnostic a result of a battery and an electronic device for performing the same.

### Background Art

Through a short-term diagnosis of a battery of an electric vehicle, a variety of information regarding the vehicle's driving distance and the battery may be acquired. The demand for the short-term battery diagnostics, which may quickly assess the condition of a battery embedded in an electric vehicle, is increasing across the overall electric vehicle industry, including used-car markets for electric vehicles and electric vehicle manufacturers. Due to the structure of the short-term battery diagnosis system, a method of periodically calling analysis results via the hypertext transfer protocol (HTTP) through an application programming interface (API) from the beginning of data analysis on battery conditions until the completion of analysis on the analysis server is used mostly, and various attempts to check short-term battery diagnostic results more efficiently and promptly while a customer waiting to use an electric vehicle with an embedded battery is present at the site are being made.

### Detailed Description of the Invention

### Technical Goals

Example embodiments of the present disclosure are to provide a method for providing a diagnostic result of a battery and an electronic device for performing the same. More particularly, an object of the present disclosure is to directly provide a state value including information on a corresponding analysis state to a user of a diagnosis company when a change is present in a battery analysis progress state being performed by an analytics company that performs battery analysis based on battery-related data received from a battery management device.

The goals to be achieved by example embodiments of the present disclosure are not limited to the objectives described above and other objects may be inferred from the following example embodiments.

### Technical solutions

According to an aspect, there is provided a method for providing a battery diagnostic result, the method performed by an electronic device and including transmitting a first state value including information on an analysis state of the battery, receiving a second state value into which the first state value is changed based on an analysis progress state of the battery, and providing the diagnostic result of the battery based on the second state value.

The transmitting of the first state value may include generating the first state value through constrained application protocol (CoAP)-based data encryption, and transmitting the first state value.

The generating of the first state value may include generating the first state value through the CoAP-based data encryption using a public key for a user of the electronic device.

The transmitting of the first state value may include transmitting a notification request at a time of a change in the analysis state of the battery.

The second state value may include at least one of a first value corresponding to an analysis success state of the battery and a second value corresponding to an analysis failure state of the analysis of the battery.

The providing of the diagnostic result may include providing information on a performance grade of the battery when the second state value is a first value corresponding to an analysis success state of the battery.

The method according to an example embodiment may further include transmitting a request for an additional analysis of the battery when the second state value is a second value corresponding to an analysis failure state of the battery.

The method according to an example embodiment may further include, when an analysis of the battery begins, receiving a notification that the analysis of the battery has begun.

According to another aspect, there is also provided an electronic device for providing a diagnostic result of a battery includes a memory configured to store an instruction, and a processor connected to the memory, and the processor is configured to transmit a first state value including information on a diagnosis state of the battery, receive a second state value based on a diagnosis progress state of the battery, and provide the diagnostic result of the battery based on the second state value.

Detailed descriptions of other example embodiments are included in a detailed description and drawings.

### Effects of the Invention

According to the example embodiments, one or more of the following effects may be expected.

According to example embodiments of the present disclosure, a short-term battery diagnosis company that needs to quickly check a battery diagnostic result may save a few minutes of time for each electric vehicle with an embedded battery and check the battery diagnostic result quickly.

According to example embodiments of the present disclosure, it is possible to reduce load and traffic for both of the short-term battery diagnosis company and a battery analysis company, as unnecessary communication with a battery analysis server for acquiring the battery diagnostic result may be minimized, and it is also possible to improve security by performing communication based on encryption.

In addition, according to example embodiments of the present disclosure, it is also possible to save a resource for server maintenance and server management as a constrained application protocol (CoAP)-based observer function as an example is used for communication.

Effects of the present disclosure are not limited to those described above and other effects may be made apparent to those skilled in the art from the following description.

### Brief Description of Drawings

FIG. 1 a diagram for describing a system for providing a diagnostic result of a battery according to an example embodiment.
FIGS. 2A and 2B are diagrams for describing an overall concept of a method for providing a diagnostic result of a battery.
FIG. 3 is a flow chart for describing a method for providing a diagnostic result of a battery according to an example embodiment.
FIG. 4 is a block diagram illustrating a configuration of an electronic device for providing a diagnostic result of a battery according to an example embodiment.

### Mode for Carrying Out the Invention

Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

In the entire specification, when an element is referred to as "comprising" or "including" another element, the element should not be understood as excluding other elements so long as there is no special conflicting description, and the element may include at least one other element.

Throughout the specification, expression "at least one of a, b, and c" may include 'a only', 'b only', 'c only', 'a and b', 'a and c', 'b and c', or 'all of a, b, and c'.

In the present disclosure, a "terminal" may be implemented as a computer or a portable terminal capable of accessing a server or another terminal through a network. Here, the computer may include, as an example, a laptop computer, a desktop computer, and a notebook equipped with a web browser, and the portable terminal, as an example, may be a wireless communication device ensuring a portability and a mobility, and include any type of handheld wireless communication device, for example, a communication-based terminal such as international mobile telecommunication (IMT), code division multiple access (CDMA), W-code division multiple access (W-CDMA), and long-term evolution (LTE), a smart phone, a tablet PC, or the like.

In the following description, example embodiments of the present disclosure will be described in detail with reference to accompanying drawings so that those skilled in the art can easily carry out the present disclosure. However, the present disclosure may be embodied in many different forms and is not limited to the example embodiments described herein.

Hereinafter, example embodiments of the present disclosure will be described with reference to the drawings.

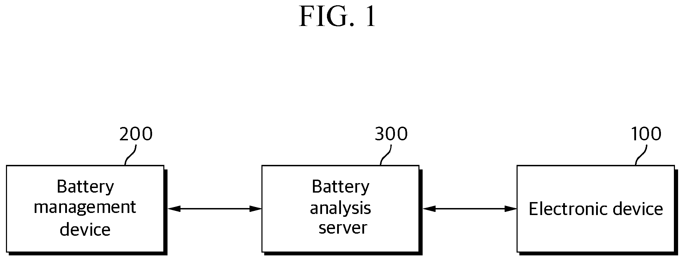

FIG. 1 illustrates an interlock relationship of an electronic device that determines an impedance of a target battery cell according to an example embodiment.

Referring to FIG. 1, an electronic device 100 may operate by interlocking with a battery analysis server 300. The battery analysis server 300 may operate by interlocking with a battery management device 200 that analyzes a battery that is a subject of a diagnosis. Meanwhile, FIG. 1 illustrates only components related to the example embodiment. Therefore, it is to be understood by those skilled in the art that other general-purpose components may be further included in addition to the components illustrated in FIG. 1.

The battery management device 200 may collect various parameters related to a battery that is embedded in an electric vehicle and is a subject of the diagnosis. The battery management device 200 may include one or more sensors for measuring one or more parameters related to the battery and may include a memory (not illustrated) and a processor (not illustrated) for various operations. That is, the battery management device 200 may measure and calculate the various parameters of the battery by including a sensor additionally while operating based on the memory and the processor similarly to the electronic device 100. As an example, the battery management system 200 may collect parameters including voltage, current, temperature, and state of charge (SOC) related to the battery that is embedded in the electric vehicle and is the subject of the diagnosis and may monitor a state of the battery in real time. The battery management device 200 may forward the parameters collected related to the battery to the battery analysis server 300 through data communication. The battery management device 200, as an example, may be embedded in an on-board diagnostics (OBD) connected to the electric vehicle and may include a plurality of sensors for collecting the various parameters related to the battery. The battery management device 200 may transmit the various parameters related to the battery to the battery analysis server 300 through, as an example, LTE communication or Wi-Fi communication. The parameters may be used to diagnose a driving distance of the electric vehicle, a SoC, a state of health (SoH), a voltage, a current, a temperature, or the like of the battery embedded in the electric vehicle.

The battery analysis server 300 may analyze data on the driving distance, an initial battery capacity, the SoC of the battery, the voltage of the battery, the current of the battery, the temperature of the battery, the SoH of the battery, a state of the battery, an electricity efficiency, or the like of the electric vehicle with the battery embedded based on the various parameters related to the battery received from the battery management device 200. The battery analysis server 300 may correspond to a cloud-based server, and the battery analysis server 300 may obtain, using an advanced analysis and an algorithm, various diagnostic results related to the battery of the electric vehicle, which is the subject of the diagnosis, and the electric vehicle based on the various parameters related to the battery received from the battery management device 200. The battery analysis server 300 may receive a request for a state value including information on an analysis state of the battery from the electronic device 100 and may transmit a push-based notification to the electronic device 100 when a change in the corresponding state value is present.

The electronic device 100 is a device for organizing and providing various information. The electronic device 100 may transmit a first state value including information on the analysis state of the battery to the battery analysis server 300 that performs an analysis of the battery and may receive a second state value from the battery analysis server 300 when the first state value is changed into the second state value upon completion of the analysis of the battery on the battery analysis server 300. The electronic device 100 may be a terminal located at an electric vehicle manufacturing company or a used-car dealer shop that requires an analysis result related to an electric vehicle, may receive a battery diagnostic result by performing constrained application protocol (CoAP)-based communication with the battery analysis server 300, and may provide the battery diagnostic result to a user. The electronic device 100 may also include a number of computer systems or computer software implemented as a cloud or a network server and may provide various information by creating a webpage. As an example, the electronic device 100 may refer to a computer system and computer software that are connected with a sub-device capable of communicating with another network through a computer network such as an intranet or the Internet, receive a request to perform a task, and provide a performance result by performing the task. In addition, the electronic device 100 may be understood as a concept in a broad sense including various databases built in an inside thereof and a series of application programs that may operate on a network server. As an example, the electronic device 100 may be implemented using various network server programs offered depending on an operating system such as DOS, Windows, Linux, UNIX, or MacOS.

Here, the electronic device 100, the battery analysis server 300, and the battery management device 200 may be independent objects completely separated from each other, but may also be conceptually separated only and exist in one device or one system. That is, one computing device with a control function for the battery may perform all functions of the electronic device 100, the battery analysis server 300, and the battery management device 200 to be described below, and therefore it is considered that such an example embodiment also falls within the scope of the present disclosure.

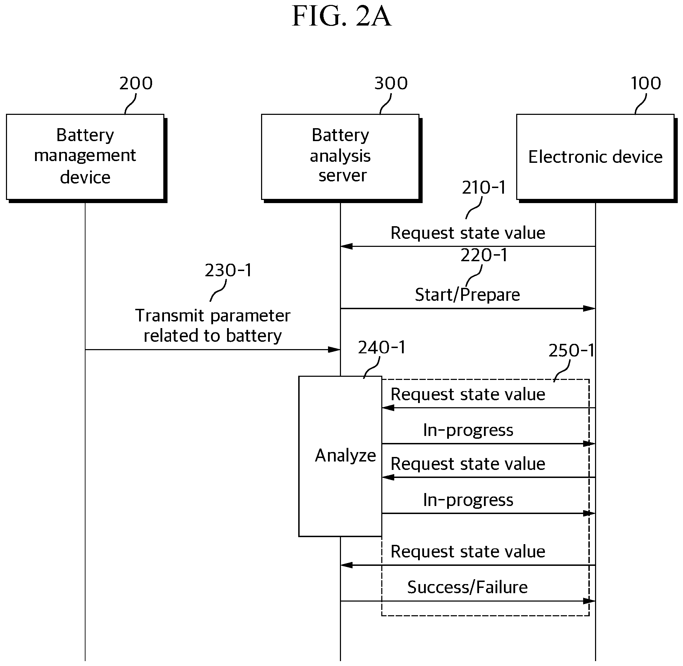

Hereinafter, a method for providing the battery diagnostic result will be described with reference to FIGS. 2A through 4 according to an example embodiment of the present disclosure.

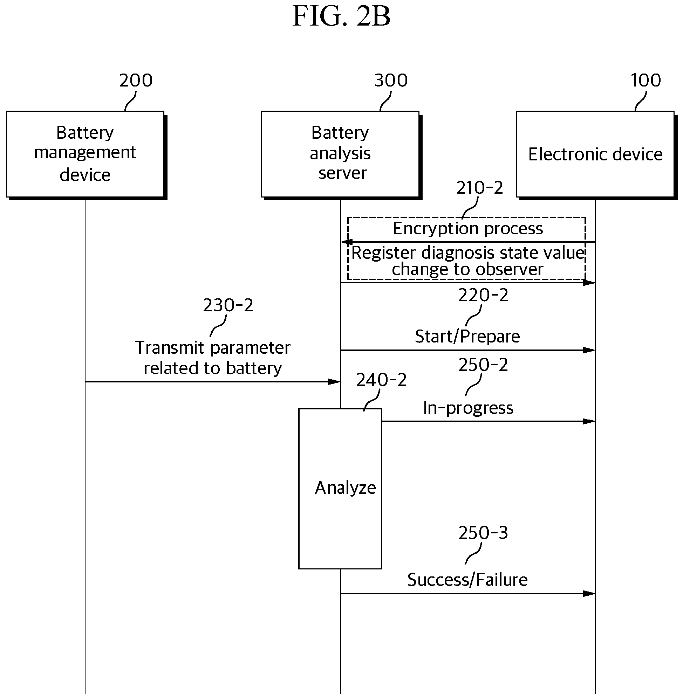

FIGS. 2A and 2B are diagrams for describing an overall concept of a method for providing a diagnostic result of a battery.

Referring to FIG. 2A, the method for proving the diagnostic result of the battery may be identified. Regarding the method for providing a diagnostic result of the battery, the electronic device 100 may request a state value including information on a battery diagnosis state from the battery analysis server 300 as shown in operation 210-1. In this case, the state value including information on the battery diagnosis state may refer to a record state value related to an electric vehicle that is a subject of a battery diagnosis that each of the electronic device 100 and the battery analysis server 300 may access during a process of performing communication between the electronic device 100 and the battery analysis server 300 and a first state value including information on the battery diagnosis state. As an example, the record state value related to the electric vehicle may include vehicle information of the electric vehicle, GPS information on driving record of the electric vehicle, and personal information such as information on a vehicle owner of the electric vehicle. As an example, information on the battery diagnosis state may include information indicating a battery analysis start state, information indicating a battery analysis in-progress state, information indicating a battery analysis success state, and information indicating a battery analysis failure state. With respect to the electronic device 100 according to an example embodiment, the battery analysis server 300 may transmit a notification of a start and preparation of a battery analysis to the electronic device 100 as shown in operation 220-1. As shown in operation 230-1, various parameters of the battery including information on initial capacity, SoC, voltage, current, temperature, SoH, and electricity efficiency of the battery may be obtained from the battery management device 200 and transmitted to be stored in the battery analysis server 300 via data communication. Then, the battery analysis server 300 may repeat a process in which the electronic device 100 continually requests for the state value during a process of performing the battery analysis based on the parameters of the battery as shown in operation 240-1 and in which, when the analysis is not completed, the battery analysis server 300 transmits a notification that the battery analysis is still in progress as shown in operation 250-1. Accordingly, a method of transmitting a notification related to the battery analysis success state and the failure state when the electronic device 100 requests the state value from the battery analysis server 300 after the battery analysis is completed on the battery analysis server 300 has been mainly used.

Due to a structure of a short-term diagnosis, for such a hypertext transfer protocol (HTTP) method for requesting the state value and providing the notification, a periodic data exchange for a result application program interface (API) has been necessarily performed from a time before completion of the battery analysis on the battery analysis server 300 until the completion of the battery analysis on the battery analysis server 300, the electronic device 100 has been to request a battery diagnosis state value from the battery analysis server 300 multiple times, and a time delay has been present even until reception of information on a final result of the battery diagnosis after a request.

Referring to FIG. 2B, a method for providing the diagnostic result of the battery according to an example embodiment may be identified.

The electronic device 100 providing the diagnostic result of the battery according to an example embodiment may encrypt and transmit, to the battery analysis server 300, the state value including the information on the battery diagnosis state and. As described above with reference to FIG. 2A, since the state value including information on the battery diagnosis state may include the record state value related to the electric vehicle that is the subject of the battery diagnosis and the first state value including the information on the battery diagnosis state, the electronic device 100 may encrypt each of the record state value related to the electric vehicle and the first state value by sharing a public key used for a Rivest-Shamir-Adleman (RSA) two-way data encryption scheme as shown in operation 210-2 during a process of transmitting the first state value including the information on the battery diagnosis state. The electronic device 100 may register a CoAP-based observer that requests a notification of the battery diagnosis state from the battery analysis server 300. As an example, a process of the electronic device 100 registering the CoAP-based observer may include an observing setting process in a normal CoAP-based protocol environment in which a client (e.g., the electronic device 100) observes a predetermined resource (e.g., the state value including information on the battery diagnosis state) at a server side (e.g., the battery analysis server 300) and requests an update when a state of the resource changes. Then, the battery analysis server 300 may transmit a notification that the battery analysis may begin to the electronic device 100 as shown in operation 220-2. The battery analysis server 300 may receive a parameter related to the battery from the battery management device 200 as shown in operation 230-2. As an example, the battery analysis server 300 may determine a performance grade of the battery based on various parameters of the battery received from the battery management device 200 as shown in process 240-2. As an example, the battery analysis server 300 may perform an analysis of determining the performance grade of the battery to be "Great" when a predetermined parameter obtained based on the information on the initial capacity, the SoC, the voltage, the current, the temperature, the SoH, and the electricity efficiency of the battery is above a predetermined first threshold value, determining the performance grade of the battery to be "Good" if the predetermined parameter is greater than or equal to a second threshold value but below the first threshold value, and determining the performance grade of the battery to be "Inspection needed" if the predetermined parameter is below the second threshold value. The battery analysis server 300 may immediately transmit, to the electronic device 100, a notification based on a battery analysis progress state when the state value of the battery diagnosis state is changed in accordance with a change in the battery diagnosis state during the battery analysis based on the parameter related to the battery as shown in operation 240-2. That is, the battery analysis server 300 may transmit a notification that an analysis progress state of the battery diagnosis is "in progress" as shown in operation 250-2 during the process of performing the analysis in operation 240-2 and may transmit a notification that an analysis progress state of the battery is a success state or a failure state as shown in operation 250-3.

That is, the electronic device 100 according to an example embodiment, as to be described in detail hereinafter, may minimize unnecessary communication between the electronic device 100 and the battery analysis server 300 and reduce a time required to check a short-term battery diagnosis result by entering the state value of the battery diagnosis state into the battery analysis server 300 and automatically receiving a changed state value from the battery analysis server 300 when a change in the state value is present.

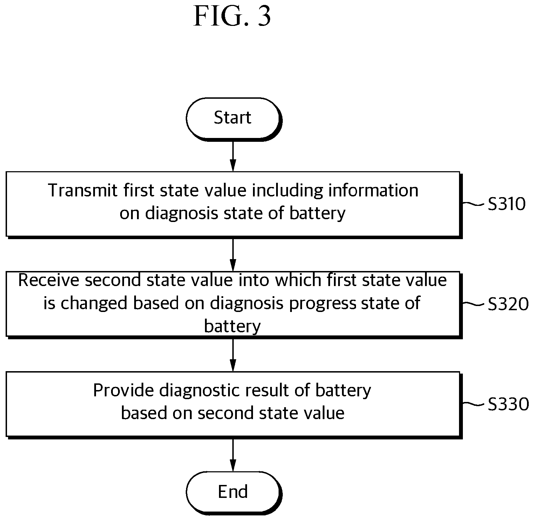

FIG. 3 is a flow chart for describing a method for providing a diagnostic result of a battery according to an example embodiment.

Referring to FIG. 3, the electronic device 100 according to an example embodiment may transmit a first state value including information on an analysis state of the battery to the battery analysis server 300 that performs an analysis of the battery in operation S310. As an example, the information on the analysis state of the battery may include a state value corresponding to a battery analysis start request state, a state value corresponding to a battery analysis in- progress state, a state value corresponding to a battery analysis success state, and a state value corresponding to a battery analysis failure state. As an example, each state value may be encoded in a binary format including information on a version of a constrained application protocol (CoAP), a type of a message, a token length indicating the length of the token, a code indicating a type of the message, and a message ID for distinguishing matching of a request message and a response message. As an example, the electronic device 100 according to an example embodiment may generate the first state value through CoAP-based data encryption and transmit the first state value to the battery analysis server 300 in operation S310. In this case, the constrained application protocol (CoAP) may refer to a special internet application protocol for constrained devices and may refer to a protocol that enables the constrained devices to communicate with a broader internet that uses a similar protocol.

The electronic device 100 according to an example embodiment may generate the first state value through the CoAP-based data encryption using a public key for a user of the electronic device 100 in operation S310. As an example, the electronic device 100 may perform the CoAP-based data encryption on each of the first state value including information on a battery diagnosis state and a record state value related to an electric vehicle. The electronic device 100 according to an example embodiment may encrypt data of each of the first state value including information on the battery diagnosis state and the record state value related to the electric vehicle based on a designated two-way encryption scheme (e.g., RSA) or algorithm. In this case, the two-way encryption algorithm may be an encryption algorithm which is capable of encryption and decryption and may include a symmetric key encryption scheme that uses identical keys for encryption and decryption and an asymmetric key encryption scheme that uses different keys for encryption and decryption. In this case, the asymmetric key encryption scheme may include a method for encrypting the first state value using a private key and decrypting an encrypted text using a public key to restore the first state value and a method for encrypting the first state value using a public key and decrypting the encrypted text using a private key to restore the first state value, but example embodiments of the method for providing the diagnostic result of the battery and an electronic device for performing the same are not limited to a predetermined case. In addition, the electronic device 100 may perform encryption on at least one of the first state value including the information on the state of the battery diagnosis state and the record state value of the electric vehicle, and example embodiments according to the present disclosure are not limited to a predetermined case.

The electronic device 100 according to an example embodiment may transmit a notification request at a time of a change in the analysis state of the battery to the battery analysis server 300 in operation S310. As an example, the electronic device 100 may receive the notification at the time of the change in the analysis state of the battery through the CoAP-based observing function described above. In this case, the observing function refers to a communication function with which a client requests a server to show a state of a resource and, as an example, may refer to a communication scheme in which the server responds in a callback-like manner when the client requests a state of a server resource of interest whenever a change in the resource is present. As an example, the electronic device 100 may register the first state value including the information on the battery analysis state through the observing function is registered, and when the first state value including the information on the battery analysis state is changed into a second state value due to such a reason that a battery analysis is started, is in progress, succeeds, or fails in the battery analysis server 300, the electronic device 100 may receive a response to a corresponding change. Through this, the electronic device 100 according to an example embodiment may receive a value from the battery analysis server 300 whenever a change in the battery analysis state is present without requesting the information on the battery analysis state multiple times, and a traffic consumed unnecessarily during a process of performing a short-term battery diagnosis may be minimized.

The electronic device 100 according to an example embodiment may receive the second state value from the battery analysis server 300 when the first state value is changed into the second state value upon completion of the analysis of the battery on the battery analysis server 300 in operation S320. In this case, the second state value may include at least one of a first value corresponding to the battery analysis success state and a second value corresponding to the battery analysis failure state. Since the battery analysis sever 300 may transmit the value to the electronic device 100 whenever the first state value changes into the second state value as described above in relation to operation S310, the electronic device 100 may receive a notification that the battery analysis has been performed successfully by receiving the first state value from the battery analysis server 300 when the battery analysis has been a success. In addition, the electronic device 100 may receive a notification that the battery analysis has failed by receiving the second state value from the battery analysis server 300 when the battery analysis has failed. As an example, the second value may be received when the number of parameters related to the battery, which the battery analysis server 300 receives from the battery management device 200 and stores, falls short of a number needed for analyzing the battery, or when information on the parameters, related to the battery according to a change of time, for the battery analysis server 300 performing the battery analysis from the battery management device 200 is insufficient as an on-board diagnostics (OBD), in which the battery management device 200 is embedded, is not mounted to the electric vehicle in which the battery is embedded, for a predetermined time (e.g., 5 minutes).

The electronic device 100 according to an example embodiment may provide the diagnostic result of the battery based on the second state value in operation S330. As an example, the electronic device 100 may provide information on a performance grade of the battery when the second state value is the first value corresponding to the battery analysis success state. As an example, the electronic device 100 may provide a diagnostic result that the performance grade of the battery is "Great" when a predetermined parameter of the battery analyzed based on information on initial capacity, voltage, current, temperature, SoH, and electricity efficiency of the battery through an analysis on the battery analysis server 300 is above a predetermined first threshold value. In addition, the electronic device 100 may provide a diagnostic result that the performance grade of the battery is "Good" when the predetermined parameter of the battery is above or equal to a second threshold value and below the predetermined first threshold value and may provide a diagnostic result that the performance grade of the battery is "Inspection needed" when the predetermined parameter of the battery is below the second threshold value.

As an example, the electronic device 100 may provide information that the analysis of the battery has failed when the second state value is the second value corresponding to the battery analysis failure state. The electronic device 100 according to an example embodiment may transmit a request for an additional analysis when the second state value is the second value corresponding to the battery analysis failure state in operation S330. As described above, when the number of parameters related to the battery, which the battery analysis server 300 receives from the battery management device 200 and stores, falls short of a number required for analyzing the battery, or when the on-board diagnostics (OBD), in which the battery management device 200 is embedded, is not mounted to the electric vehicle, in which the battery is embedded, for a predetermined time, the battery analysis server 300 may transmit the second value corresponding to the battery analysis failure state as the second state value to the electronic device 100, and the electronic device 100 may receive the second value from the battery analysis server 300. In this case, as an example, the electronic device 100 according to an example embodiment may transmit the request for the additional analysis of the battery to the battery analysis server 300 based on a user input received through a user interface device. As an example, the electronic device 100 may transmit the request for the additional analysis of the battery to the battery analysis server 300 automatically when received the second value according to a predetermined condition. The battery analysis server 300 that receives the request for the additional analysis of the battery may receive a parameter related to the battery again from the battery management device 200 and perform the battery analysis based the parameter related to the battery. The electronic device 100 may provide a battery diagnostic result by performing a process according to the above-described operation S310 and operation S320.

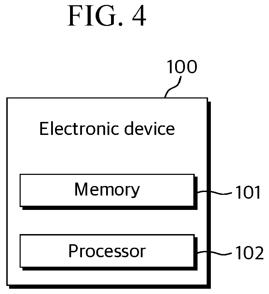

FIG. 4 is a block diagram illustrating a configuration of an electronic device for determining an impedance of a battery cell according to an example embodiment.

FIG. 4 illustrates a block diagram of the electronic device 100 according to an example embodiment. The electronic device 100 according to an example embodiment may include a memory 101 or a processor 102. The electronic device 100 illustrated in FIG. 4 only includes components related to the example embodiment. Therefore, it may be understood by those skilled in the art that other general-purpose components may be further included in addition to the components illustrated in FIG. 4.

The memory 101 according to an example embodiment, as hardware for storing a variety of data that is processed within the electronic device 100, may be located within the processor 102 in the electronic device 100 and store data processed and data to be processed through the processor 102. In addition, the memory 101 may store a basic programing and data structure that is capable of providing a function of at least one example embodiment of the present disclosure and may also store applications (a program, a code module, and an instruction), drivers, or the like that is capable of providing the function of example embodiments of the present disclosure. The memory 101 may include a random-access memory (RAM) such as a dynamic random-access memory (DRAM) and a static random-access memory (SRAM), a read-only memory (ROM), an electrically erasable programmable read-only memory (EEPROM), a compact disc (CD)-ROM, Blu-ray or other optical disk storage, a hard disk drive (HDD), a solid-state drive (SSD), or a flash memory, but example embodiments of the present disclosure are not limited to the described predetermined case.

The processor 102 according to an example embodiment may control an overall operation of the electronic device 100 and process data and a signal. The processor 102 may be configured as at least one hardware unit. In addition, the processor 102 may be operated by one or more software modules created by executing a program code stored in the memory 101. As the processor 102 may include the memory 101, the processor 102 may control the overall operations of the electronic device 100 and process the data and the signal by executing the program code stored in the memory 101.

The processor 102 according to an example embodiment may be configured to transmit a first state value including information on an analysis state of a battery, receive a second state value into which the first state value is changed based on an analysis progress state of the battery, and provide a diagnostic result of the battery based on the second state value. The processor 102 according to an example embodiment may be configured to generate the first state value through CoAP-based data encryption and transmit the first state value. The processor 102 according to an example embodiment may be configured to generate the first state value through the CoAP-based data encryption using a public key for a user of the electronic device 100. The processor 102 according to an example embodiment may be configured to transmit a notification request at a time of a change in the analysis state of the battery. The processor 102 according to an example embodiment may be configured to provide information on a performance grade of the battery when the second state value is a first value corresponding to an analysis success state of the battery. The processor 102 according to an example embodiment may be configured to transmit a request for an additional analysis when the second state value is a second value corresponding to an analysis failure state of the battery. The processor 102 according to an embodiment may be configured to, when the analysis of the battery begins, receive a notification that the analysis of the battery has begun.

According to an example embodiment, the electronic device 100 may further include a transceiver for wired/wireless communication. The electronic device 100 may communicate with an external electronic device (e.g., the battery management device 200). The external electronic device may be a terminal or a server. In addition, communication technologies supported by the transceiver may include global system for mobile communication (GSM), code division multi access (CDMA), long term evolution (LTE), wireless-fidelity (Wi-Fi), Bluetooth^{™}, radio frequency identification (RFID), infrared data association (IrDA), zigBee, near field communication (NFC), and the like.

The electronic device 100 in accordance with the example embodiments described above may include a processor, a memory which stores and executes program data, a permanent storage such as a disk drive, a communication port for communication with an external device, and a user interface device such as a touch panel, a key, and a button. Methods realized by software modules or algorithms may be stored in a computer-readable recording medium as computer-readable codes or program commands which may be executed by the processor. Here, the computer-readable recording medium may be a magnetic storage medium (for example, a read-only memory (ROM), a random-access memory (RAM), a floppy disk, or a hard disk) or an optical reading medium (for example, a CD-ROM or a digital versatile disc (DVD)). The computer-readable recording medium may be dispersed to computer systems connected by a network so that computer-readable codes may be stored and executed in a dispersion manner. The medium may be read by a computer, may be stored in a memory, and may be executed by the processor.

The example embodiments may be represented by functional blocks and various processing steps. These functional blocks may be implemented by various numbers of hardware and/or software configurations that execute specific functions. For example, the example embodiments may adopt direct circuit configurations such as a memory, a processor, a logic circuit, and a look-up table that may execute various functions by control of one or more microprocessors or other control devices. Similarly to that elements may be executed by software programming or software elements, the example embodiments may be implemented by programming or scripting languages such as C, C++, Java, and assembler including various algorithms implemented by combinations of data structures, processes, routines, or of other programming configurations. Functional aspects may be implemented by algorithms executed by one or more processors. In addition, the example embodiments may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor, for example.

The example embodiments described above are merely examples and other embodiments may be implemented within the scope of the following claims.

## Claims

1. A method for providing a diagnostic result of a battery, the method performed by an electronic device and comprising:
transmitting a first state value including information on an analysis state of the battery;
receiving a second state value into which the first state value is changed based on an analysis progress state of the battery; and
providing the diagnostic result of the battery based on the second state value.

2. The method of claim 1, wherein the transmitting of the first state value comprises:
generating the first state value through constrained application protocol (CoAP)-based data encryption; and
transmitting the first state value.

3. The method of claim 2, wherein the generating of the first state value comprises generating the first state value through the CoAP-based data encryption using a public key for a user of the electronic device.

4. The method of claim 1, wherein the transmitting of the first state value comprises transmitting a notification request at a time of a change in the analysis state of the battery.

5. The method of claim 1, wherein the second state value comprises at least one of a first value corresponding to an analysis success state of the battery and a second value corresponding to an analysis failure state of the battery.

6. The method of claim 1, wherein the providing of the diagnostic result comprises providing information on a performance grade of the battery when the second state value is a first value corresponding to an analysis success state of the battery.

7. The method of claim 1, further comprising transmitting a request for an additional analysis of the battery when the second state value is a second value corresponding to an analysis failure state of the battery.

8. The method of claim 1, further comprising, when an analysis of the battery begins, receiving a notification that the analysis of the battery has begun.

9. A non-transitory computer-readable recording medium in which a program for executing the method of any one of claims 1 through 8 in an electronic device is recorded.

10. An electronic device for providing a diagnostic result of a battery, the electronic device comprising:
a memory configured to store an instruction; and
a processor connected to the memory,
wherein the processor is configured to:
transmit a first state value including information on a diagnosis state of the battery;
receive a second state value based on a diagnosis progress state of the battery; and
provide the diagnostic result of the battery based on the second state value.
